# EUROPÄISCHE PATENTSCHRIFT

(11) **EP 0 547 323 B1**
(45) Veröffentlichungstag und Bekanntmachung des Hinweises auf die Patenterteilung: **16.04.1997**
(21) Anmeldenummer: 92117494.2
(22) Anmeldetag: 14.10.1992
(51) Int. Cl.: G02B 6/44

(54) **LWL-Verbindungseinrichtung für eine Abzweigung und Verfahren zum Herstellen einer LWL-Verbindung an einer Abzweigung**
Device for connecting optical waveguides at a branching point and method of connecting optical waveguides at a branching point
Dispositif de connexion des guides d'ondes optiques pour un branchement et méthode de connexion des guides d'ondes optiques à un branchement

(30) Priorität: 17.12.1991 DE 4141570
(43) Veröffentlichungstag der Anmeldung: 23.06.1993
(73) Patentinhaber: KABELRHEYDT AKTIENGESELLSCHAFT, D-41201 Mönchengladbach (DE)
(72) Erfinder: Girbig, Reinhard, Dipl.-Ing., W-4050 Mönchengladbach (DE); Zamzow, Peter, Dipl.-Ing., W-4630 Bochum (DE)
(74) Vertreter: Mende, Eberhard, Dipl.-Ing.

(56) Entgegenhaltungen:
- EP-A- 0 077 115
- EP-A- 0 260 741
- EP-A- 0 350 245
- DE-A- 3 301 723
- DE-A- 3 537 684
- DE-A- 3 605 389
- DE-U- 8 712 964
- PATENT ABSTRACTS OF JAPAN vol. 14, no. 389 (P-1095)(4332) 22. August 1990 & JP-A-21 46 003

## Beschreibung

Die Erfindung betrifft eine LWL-Verbindungseinrichtung zum Herstellen einer Verbindung von einem aus einem Haupt- oder Ortskabel herausgetrennten Abzweigkabel zu einem Teilnehmer, bestehend aus einem Teilnehmerkabel, an das ein Teilnehmer angeschlossen werden kann, sowie einer Abzweigmuffe zum Verbinden von Abzweigkabel und Teilnehmerkabel, wobei die Abzweigmuffe ein geteiltes Gehäuse, Durchführungen für Teilnehmerkabel und Abzweigkabel, einen Spleißhalter, in dem mechanische Spleiße von optischen Fasern gehalten sind, sowie Klemmvorrichtungen für Abzweig- und Teilnehmerkabel aufweist, bzw. ein Verfahren zum Herstellen einer LWL-Verbindung von einem aus einem Haupt- oder Ortskabel herausgetrennten Abzweigkabel zu einem Teilnehmer.

Nach der Verlegung eines optischen Kabels im Erdreich ist es gelegentlich notwendig, an einer bestimmten Stelle eine Stichleitung beispielsweise zu einem Haus zu führen und neue Teilnehmer anzuschließen. Zu diesem Zweck wird das Haupt- oder Ortskabel auf einer bestimmten Strecke freigelegt und eine Spleißung an mindestens einer optischen Faser vorgenommen. Es wird zunehmend zur Regel, in Ortsnetzen Glasfasern zumindest zusätzlich zu vorhandenen Nachrichtenleitungen aus Kupfer zu verlegen.

LWL-Abzweige sind in vielen Ausführungsformen bekannt. Zum Anschluß von Teilnehmern im Ortsnetz ist es nötig, entsprechende Abzweige aus dem Hauptkabel vorzunehmen. Liegt das Hauptkabel in Form eines Stegkabels mit im allgemeinen mehr als vier parallelen LWL-Adern vor, so werden aus dem Steg- oder Flachkabel in an sich bekannter Weise Kabelstränge herausgetrennt und direkt zum Haus hin verlegt. Ein solcher Abzweig ist aus der DE-A-36 30 659 bekannt.

In einem zukünftigen Ortsnetz in Glasfasertechnik ist eine Vielzahl von Teilnehmeranschlüssen zu realisieren. Dies bedeutet eine große Anzahl von Abzweigpunkten von einem Haupt- oder Ortskabel zu den einzelnen Häusern. Stand der Technik ist dabei der Einsatz von Aufteilmuffen. Diese sind groß und man benötigt zum Verspleißen der optischen Fasern eine Absetzlänge des Kabels von ca. 2 m; dementsprechend groß müssen auch die Baugruben ausgehoben werden. Bei der Erstverlegung spielt dies keine große Rolle; bei einem späteren Ausbau jedoch fallen teure Erdarbeiten an, um die benötigte Faserreserve zu erhalten. Eine Möglichkeit, dies zu umgehen, besteht darin, schon beim Erstausbau eine ausreichende Faserreserve in Form von Schleifen in die Erde zu legen. Aus planerischen Gesichtspunkten ist diese Lösung nicht günstig.

Zur Zeit erfolgt die Faserverbindung in Muffen, wie sie in der DE-A-36 25 888 beschrieben sind und mit Hilfe thermischer Spleißvorrichtungen. Diese Geräte sind teuer und benötigen gut geschultes Personal.

In der EP-A-0 077 115 ist eine Muffe zum Verbinden von zwei optischen Kabeln beschrieben, die ein zylindrisches Gehäuse aus einem transparenten Rohr, an den Enden des Rohres Kappen mit Durchführungen für die beiden Kabel sowie Klemmvorrichtungen für die Kabel aufweist. Die optischen Fasern der beiden Kabel werden durch thermische Verschweißung miteinander verbunden. Die Spleiße werden in geeigneten Haltevorrichtungen abgelegt und mittels einer Masse fixiert.

Der Erfindung liegt die Aufgabe zugrunde, eine LWL-Verbindungseinrichtung zum Herstellen einer Verbindung von einem aus einem Haupt- oder Ortskabel herausgetrennten Abzweigkabel zu einem Teilnehmerkabel zu schaffen, die zusätzlichen Teilnehmern eine Anschlußmöglichkeit bietet und bei der das Haupt- oder Ortskabel nur über eine geringe Länge freigelegt werden muß.

Diese Aufgabe wird gemäß dem Patentanspruch 1 bzw. dem Patentanspruch 3 gelöst, indem das Teilnehmerkabel mit der Abzweigmuffe einstückig vorkonfektioniert ist, wobei das Teilnehmerkabel durch eine der Durchführungen der Abzweigmuffe in die Abzweigmuffe eingeführt und mittels einer der Klemmvorrichtungen festgeklemmt ist und optische Fasern des Teilnehmerkabels einseitig in die mechanischen Spleiße eingelegt und fixiert sind, die Abzweigmuffe von der Seite des Teilnehmers aus durch ein Verbindungsrohr zum Haupt- oder Ortskabel hindurchgeschoben wird, optische Fasern des Abzweigkabels in die entsprechenden mechanischen Spleiße eingelegt und fixiert werden, und abschließend die Abzweigmuffe verschlossen wird.

Der Vorteil der Erfindung liegt darin, daß man die Erdarbeiten auf ein sehr viel kleineres Loch beschränken kann, was erhebliche Einsparungen zur Folge hat. Außerdem ist es in vielen Fällen wegen der örtlichen Gegebenheiten kaum möglich, ein 2 m langes Stück Kabel freizulegen. Bei der erfindungsgemäßen LWL-Verbindung wird die auszuhebende Grube etwa die Maße 1 x 1 m² besitzen.

Die Erfindung wird nachstehend anhand der Zeichnung näher erläutert. Dabei zeigen
- Figur 1: einen Schnitt durch eine Abzweigmuffe nach der Erfindung und
- Figur 2: ein Ausführungsbeispiel der LWL-Verbindungseinrichtung.

Aus einem Haupt- oder Ortskabel gewinnt man etwa 1 m an Vorratslänge, welche zum Anfertigen einer mechanischen Spleißverbindung auch dann ausreichend ist, wenn beim Spleißen die dazu notwendigen Prozeduren nicht sofort zu einem optisch einwandfreien Ergebnis führen und wiederholt werden müssen. Eine Abzweigmuffe 2 enthält zumindest einen mechanischen Spleiß 3, welcher eine optische Faser 4 eines Teilnehmerkabels 1 mit einer optischen Faser 8 eines Abzweigkabels 6 verbindet. Die Abzweigmuffe 2 weist ein Gehäuse 7 auf, das aus einem Rohrstück, welches in zwei Hälften geschnitten wurde und später zusammengesetzt wird, gebildet ist. In der Mitte der Abzweigmuffe 2 befindet sich ein Spleißhalter 9 zur Aufnahme und Halterung von mechanischen Spleißen 3. Die Fasern 4 und 8 verlaufen innerhalb der Abzweigmuffe 2 in Form einer Wendel, so daß etwas Überlänge vorhanden ist. Damit ist gewährleistet, daß keine Zugkräfte auf die Fasern einwirken, wenn am Teilnehmerkabel 1 und/oder Abzweigkabel 6 Kräfte in Längsrichtung auftreten. An den konisch zulaufenden Enden des Gehäuses 7 befinden sich Klemmvorrichtungen 10 für Teilnehmerkabel 1 und Abzweigkabel 6.

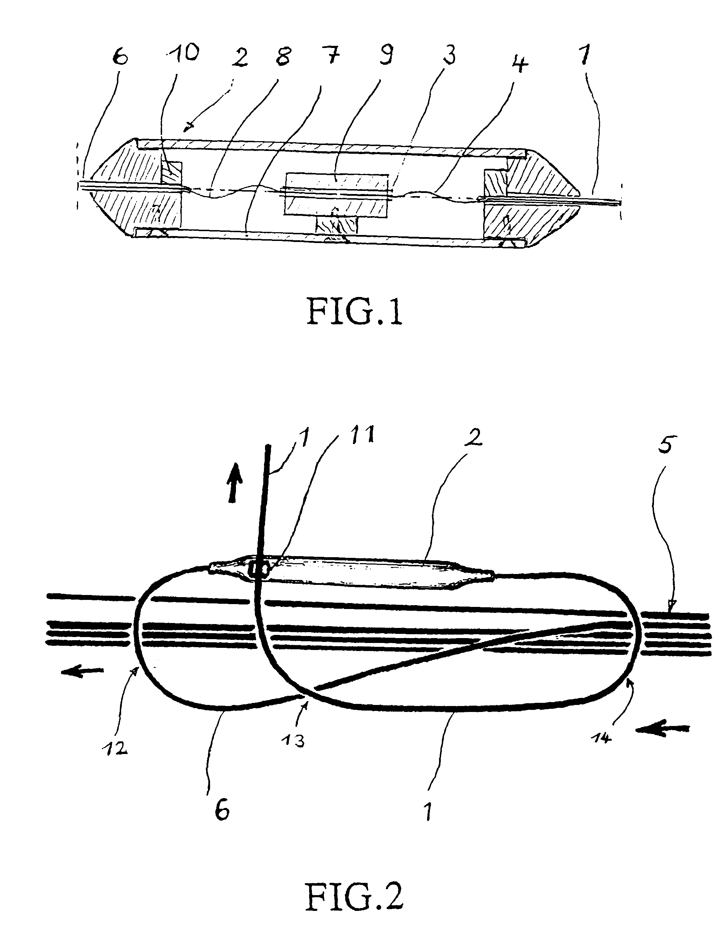

Die Erfindung wird nun anhand der Figur 2, welche einen Abzweig aus einem Stegkabel zeigt, näher erläutert.

Ein Teilnehmerkabel 1, das auch als Hauseinführungskabel (HEK) bezeichnet wird, ist mit einer einseitig angeschlossenen Abzweigmuffe 2, wie sie in der Figur 1 dargestellt ist, vorkonfektioniert. Das zweigeteilte, zylindrische Gehäuse 7 der Abzweigmuffe 2 hat einen Durchmesser von 20 mm. Aufgrund der schlanken Form ihres Gehäuses 7 kann die Abzweigmuffe 2 daher durch standardmäßige Mauerdurchführungen und Rohre vom Haus zu einer Baugruppe geführt werden. Für ein eventuelles Anbringen einer Zugöse kann die freie zweite Kabelklemmvorrichtung 10 im Gehäuse 7 der Abzweigmuffe 2 genutzt werden.

Ein solches Teilnehmerkabel 1 wird mit der Abzweigmuffe 2 bereits fertig verbunden und vorkonfektioniert an der Baustelle angeliefert. Dabei sind die optischen Fasern 4 des Teilnehmerkabels 1 bereits einseitig in die mechanischen Spleiße 3 eingelegt. Auf der Baustelle müssen dann nur noch von der anderen Seite das Abzweigkabel 6 über eine Absetzlänge von etwa 1 m abgemantelt, seine optischen Fasern 8 in die Abzweigmuffe 2 eingeführt und in die mechanischen Spleiße 3 eingelegt und verriegelt werden. Außerdem muß dann die obere Hälfte des Gehäuses 7 aufgelegt und mit einem Schrumpfschlauch mit dem unteren Teil wasserdicht verbunden werden.

Das vorkonfektionierte Ende des Teilnehmerkabels 1 wird durch die Hauseinführung in ein vorbereitetes Rohr eingeschoben, bis es an der aufgegrabenen Stelle des Haupt- oder Ortskabels 5, wo die Verbindung hergestellt werden soll, aufgenommen wird. Die Entfernung von der Hauseinführung zur Baustelle beträgt üblicherweise 3 bis höchstens 10 m. Der Vorteil des vorkonfektionierten Teilnehmerkabels 1 besteht in einer Kostenreduzierung infolge der Reduzierung der Arbeit an der Baustelle und in der Möglichkeit, dem Personal die Arbeit vor Ort zu erleichtern. Der Vorteil der mechanischen Spleiße 3 kommt der Arbeitsweise insofern zugute, als man im Werk die optischen Fasern 4 des Teilnehmerkabels 1 einseitig einlegen und die mechanischen Spleiße 3 an dem Spleißhalter 9 befestigen kann, so daß nur noch die andere Seite zu bestücken ist. Von Vorteil ist auch, daß bei mechanischen Spleißen die Absetzlängen nur 20 - 30 mm betragen.

Das Abzweigkabel 6 beschreibt vor der Einführung in die Abzweigmuffe 2 einen Bogen 12 von 180 Grad. Das Teilnehmerkabel 1 beschreibt zweckmäßigerweise Bögen 13 und 14 von insgesamt 270 Grad. Dadurch, daß es an der Abzweigmuffe 2 durch eine Schelle 11 befestigt ist, wird das Teilnehmerkabel 1 zugentlastet.

## Patentansprüche

1. LWL-Verbindungseinrichtung zum Herstellen einer Verbindung von einem aus einem Haupt- oder Ortskabel herausgetrennten Abzweigkabel zu einem Teilnehmer, bestehend aus einem Teilnehmerkabel, an das ein Teilnehmer angeschlossen werden kann, sowie einer Abzweigmuffe zum Verbinden von Abzweigkabel und Teilnehmerkabel, wobei die Abzweigmuffe ein geteiltes Gehäuse, Durchführungen für Teilnehmerkabel und Abzweigkabel, einen Spleißhalter, in dem mechanische Spleiße von optischen Fasern gehalten sind, sowie Klemmvorrichtungen für Abzweig- und Teilnehmerkabel aufweist, dadurch gekennzeichnet, daß das Teilnehmerkabel (1) mit der Abzweigmuffe (2) einstückig vorkonfektioniert ist, wobei das Teilnehmerkabel (1) durch eine der Durchführungen der Abzweigmuffe (2) in die Abzweigmuffe (2) eingeführt und mittels einer der Klemmvorrichtungen festgeklemmt ist und optische Fasern (4) des Teilnehmerkabels (1) einseitig in die mechanischen Spleiße (3) eingelegt und fixiert sind, und daß der Außendurchmesser des Gehäuses (7) der Abzweigmuffe (2) zwischen 20 und 35 mm beträgt, so daß die Abzweigmuffe (2) von der Seite des Teilnehmers aus durch ein Verbindungsrohr zum Haupt- oder Ortskabel (5) hindurchschiebbar ist.

2. LWL-Verbindungseinrichtung nach Anspruch 1, dadurch gekennzeichnet, daß die optischen Fasern (4, 8) in der Abzweigmuffe (2) die Form einer Wendel bilden.

3. Verfahren zum Herstellen einer LWL-Verbindung von einem aus einem Haupt- oder Ortskabel herausgetrennten Abzweigkabel zu einem Teilnehmer, bei dem
- ein mit einer Abzweigmuffe (2) einstückig vorkonfektioniertes Teilnehmerkabel (1), dessen optische Fasern (4) bereits einseitig in in der Abzweigmuffe (2) gehaltene mechanische Spleiße (3) eingelegt und fixiert sind, von der Seite des Teilnehmers aus durch ein Verbindungsrohr zum Haupt- oder Ortskabel (5) hindurchgeschoben wird,
- optische Fasern (8) des Abzweigkabels (6) in die entsprechenden mechanischen Spleiße (3) eingelegt und fixiert werden, und
- abschließend die Abzweigmuffe (2) verschlossen wird.

4. Verfahren nach Anspruch 3, dadurch gekennzeichnet, daß das aus dem Haupt- oder Ortskabel (5) herausgetrennte Abzweigkabel (6) vor seiner Einführung in die Abzweigmuffe (2) in einem Bogen (12) von etwa 180 Grad verlegt wird.

5. Verfahren nach Anspruch 3 oder 4, dadurch gekennzeichnet, daß das Teilnehmerkabel (1) zwischen der Abzweigmuffe (2) und dem Teilnehmer in Bögen (13 und 14) von insgesamt 270 Grad verlegt wird.

## Claims

1. Optical waveguide connecting device for producing a connection of a branch cable, which is separated out from a main cable or a local cable, to a subscriber, the device comprising a subscriber cable to which a subscriber may be connected, and a branching sleeve for connecting branch cable and subscriber cable, the branching sleeve having a divided housing, bushings for subscriber cable and branch cable, a splice holder in which mechanical splices of optical fibres are held, and clamping devices for branch and subscriber cable, characterized in that the subscriber cable (1) is pre-equipped with the branching sleeve (2) in one piece, the subscriber cable (1) being introduced into the branching sleeve (2) through one of the bushings in the branching sleeve (2) and being firmly clamped by means of one of the clamping devices, and optical fibres (4) of the subscriber cable (1) being inserted on one side into the mechanical splices (3) and fixed, and in that the outer diameter of the housing (7) of the branching sleeve (2) is between 20 and 35 mm, so that the branching sleeve (2) can be pushed through from the side of the subscriber through a connecting pipe to the main or local cable (5).

2. Optical waveguide connecting device according to Claim 1, characterized in that the optical fibres (4, 8) in the branching sleeve (2) form the shape of a helix.

3. Method for producing an optical waveguide connection of a branch cable, which is separated out from a main cable or a local cable, to a subscriber, in which
- a subscriber cable (1) which is pre-equipped with a branching sleeve (2) in one piece and whose optical fibres (4) are already inserted on one side into mechanical splices (3) held in the branching sleeve (2) and are fixed, is pushed through from the side of the subscriber through a connecting pipe to the main or local cable (5),
- optical fibres (8) of the branch cable (6) are inserted into the corresponding mechanical splices (3) and are fixed, and
- finally, the branching sleeve (2) is closed.

4. Method according to Claim 3, characterized in that the branch cable (6), which is separated out from the main or local cable (5), is laid in a curve (12) of about 180 degrees before its introduction into the branching sleeve (2).

5. Method according to Claim 3 or 4, characterized in that the subscriber cable (1) is laid in curves (13 and 14) of a total of 270 degrees between the branching sleeve (2) and the subscriber.

## Revendications

1. Dispositif de liaison pour fibres optiques permettant d'établir une liaison entre un câble de dérivation extrait d'un câble principal ou local, et un abonné, le dispositif comprenant un câble d'abonné susceptible d'être relié à un poste d'abonné, ainsi qu'un manchon de dérivation permettant d'interconnecter le câble de dérivation et le câble d'abonné, le manchon de dérivation comportant un boîtier divisé, des traversées pour le câble d'abonné et le câble de dérivation, un support d'épissure, dans lequel les épissures mécaniques des fibres optiques sont maintenues en place, ainsi que des dispositifs de serrage pour le câble de dérivation et le câble d'abonné, caractérisé par le fait que le câble d'abonné (1) est préconfectionné en usine avec le manchon de dérivation (2) en une seule pièce, le câble d'abonné (1) étant introduit par l'une des traversées du manchon de dérivation (2) dans ce manchon (2) et y étant bloqué à l'aide de dispositifs de serrage, et les fibres optiques (4) du câble d'abonné (1) étant posées et fixées dans un côté des épissures mécaniques (3), et que le diamètre extérieur du boîtier (7) du manchon de dérivation (2) se situe entre 20 et 35 mm, de sorte que le manchon de dérivation (2) peut glisser à travers un tube de liaison en partant du côté de l'abonné vers le câble principal ou local (5).

2. Dispositif de liaison pour fibres optiques selon la revendication 1, caractérisé en ce que les fibres optiques (4, 8) sont posées hélicoïdalement dans le manchon de dérivation (2).

3. Procédé pour l'établissement d'une liaison à fibres optiques entre un câble de dérivation extrait d'un câble principal ou local et un poste d'abonné, selon lequel
- un câble d'abonné (1), qui est préconfectionné en une seule pièce avec un manchon de dérivation (2) et dont les fibres optiques (4) sont déjà posées et fixées d'un côté dans l'épissure mécanique (3) qui est supportée dans le manchon de dérivation (2), est poussé à partir du côté d'abonné vers le câble principal ou local (5) à travers un tube de liaison,
- ensuite, les fibres optiques (8) du câble de dérivation (6) sont posées et fixées dans l'épissure mécanique correspondante (3), et
- enfin, le manchon de dérivation (2) est fermé.

4. Procédé selon la revendication 3, caractérisé en ce qu'avant son introduction dans le manchon de dérivation (2), le câble de dérivation (6) extrait du câble principal ou local (5) est posé en un arc (12) s'étendant à environ 180°.

5. Procédé selon la revendication 3 ou 4, caractérisé en ce que le câble d'abonné (1) est posé entre le manchon de dérivation (2) et l'abonné sous forme d'arcs (13 et 14) s'étendant globalement sur 270°.
